# EUROPÄISCHE PATENTSCHRIFT

(11) **EP 0 682 994 B1**
(45) Veröffentlichungstag und Bekanntmachung des Hinweises auf die Patenterteilung: **19.05.1999**
(21) Anmeldenummer: 94103452.2
(22) Anmeldetag: 07.03.1994
(51) Int. Cl.: B09B 3/00, A62D 3/00

(54) **Autoklav und Verwendung des Autoklaven in einem Verfahren zur Entfernen von chlorierte organische Verbindungen enthaltender Flüssigkeit aus einem Gerät**
Autoclave and use of the autoclave for removing a liquid containing chlorinated organic compounds from an apparatus
Autoclave et utilisation de l'autoclave pour éliminer un liquide contenant des composés organiques chlorés à partir d'un appareil

(43) Veröffentlichungstag der Anmeldung: 22.11.1995
(73) Patentinhaber: MICAFIL AG, 8048 Zürich (CH)
(72) Erfinder: Balg, Jürgen, Dr., CH-5415 Nussbaumen (CH); Gmeiner, Paul, CH-8966 Lieli (CH)
(74) Vertreter: Kaiser, Helmut, Dr.

(56) Entgegenhaltungen:
- EP-A- 0 423 039
- US-A- 5 103 578

## Beschreibung

### TECHNISCHES GEBIET

Bei der Erfindung wird ausgegangen von einem Autoklaven gemäss dem Oberbegriff von Patentanspruch 1. Die Erfindung betrifft auch eine Verwendung des Autoklaven in einem Verfahren zum Entfernen von chlorierte organische Verbindungen enthaltender Flüssigkeit aus einem Gerät.

### STAND DER TECHNIK

Ein Autoklav der eingangs genannten Art ist beispielsweise aus EP 0 423 039 A1 bekannt. Mit dem bekannten Autoklaven können aus einem elektrischen Gerät die nach Ablassen von Isolierflüssigkeit auf der Basis polychlorierter Biphenyle (PCB) in schwer zugänglichen Bestandteilen des Gerätes verbleibenden restlichen polychlorierten Biphenyle entfernt werden. Hierzu werden die mit den Biphenylen getränkten Bestandteile, wie beispielsweise organische Isolierstoffen auf der Basis von Holz, Papier, Baumwolle oder Kunststoff, zunächst in einem Autoklaven bei einer Temperatur von bis zu 100°C getrocknet. Nachfolgend wird der Autoklav evakuiert. Hierbei werden Sauerstoff und sauerstoffhaltige Verbindungen, insbesondere Wasser, aus dem Gerät entfernt. Das Gerät wird sodann mit einem inerten Trägergas auf Temperaturen von mehr als 200°C, höchstens aber auf 500°C aufgeheizt. Bei einem Druck von höchstens 0,5 bar wird das PCB aus dem Gerät ausgegast. Das aus dem Trägergas und den ausgegasten Bestandteilen gebildete Prozessgas wird nachfolgend in eine Kühlvorrichtung geführt, in der die schädlichen chlorhaltigen Bestandteile durch Kondensation aus dem Prozessgas entfernt werden.

Da das Verfahren nur bei vergleichsweise geringen Drücken ausgeführt wird, ist auch der Druck des zur Aufheizung des zu reinigenden Gerätes verwendeten inerten Trägergases gering. Daher kann das Trägergas nur verhältnismässig wenig Energie an das zu reinigende Gerät abgeben. Insbesondere bei grossen Geräten, wie etwa Transformatoren, kann daher die Durchführung des Verfahrens verhältnismässig viel Zeit in Anspruch nehmen. Darüber hinaus besteht zwischen Atmosphärendruck und Betriebsdruck eine relativ grosse Druckdifferenz, so dass der unerwünschte Zutritt von atmosphärischem Sauerstoff nur mit einem verhältnismässig aufwendig ausgebildeten Autoklaven unter einem vorgeschriebenen Grenzwert gehalten werden kann.

Ein zum Entfernen von flüchtigen organischen Verbindungen, wie insbesondere von PCB, aus kontamierter Erde verwendeter Autoklav ist in US-A-5,103,578 beschrieben. Die in den Autoklaven eingeschlossene Erde wird bei einem Unterdruck zwischen 0,005 und 400 mm Hg mit Hilfe von elektrischen Heizelementen oder flüssigkeitsdurchströmten Heizspiralen erwärmt. Hierbei entstehende PCB-haltige Dämpfe werden mit einem Trägergas gemischt, das gebildete Trägergas-PCB-Gemisch wird aus dem Autoklaven entfernt und in einer Abscheidevorrichtung wird sodann das PCB durch Kondensation aus dem Trägergas-PCB-Gemisch entfernt.

Zur Reinigung eines mit PCB kontaminierten Gerätes ist dieses Verfahren relativ aufwendig, da die Heizelemente bzw. Heizspiralen an das zu reinigende Gerät gebracht werden müssen, und da das Trägergas lediglich dem Abtransport des ausgegasten PCBs dient.

### DARSTELLUNG DER ERFINDUNG

Die Erfindung, wie sie in den Patentansprüchen definiert ist, löst die Aufgabe, einen Autoklaven der gattungsgemässen Art zu schaffen, welcher es ermöglicht, chlorierte organische Verbindungen enthaltende, grosse Geräte mit einem hohen Mass an Sicherheit zu entsorgen. Zugleich soll eine besonders vorteilhafte Verwendung des Autoklaven angegeben werden.

Beim Autoklaven nach der Erfindung ist durch geeignete Ausbildung und Anordnung von hitze- und verschmutzungsgefährdeten Teilen ein besonders sicherer und nur geringe Wartung erfordernder Betrieb gewährleistet. Solche hitze- und verschmutzungsgefährdeten Teile sind insbesondere Deckeldichtungen und eine gegebenenfalls vorgesehene Wellendurchführung, etwa für einen Ventilator, der eine besonders effektive Verwirbelung eines zu Heizzwecken vorgesehenen inerten Trägergases bewirkt. Darüber hinaus ist es besonders günstig, dass der Betriebsdruck des Autoklaven nur unwesentlich vom Atmosphärendruck abweicht, da hierdurch die Leckrate des Autoklaven mit geringem Aufwand klein gehalten und somit der Zutritt von Sauerstoff nahezu vermieden wird. Zudem kann der Restgehalt an PCB sehr genau und äusserst einfach durch Druckmessung bestimmt werden, weil wegen der kleinen Leckrate des Autoklaven praktisch keine die Druckmessung verfälschende Leckluft zugeführt wird.

Der Autoklav nach der Erfindung kann mit Vorteil in einem Verfahren verwendet werden, bei dem chlorierte organische Verbindungen enthaltende Flüssigkeit aus einem Gerät in technologisch einfach durchzuführenden Verfahrensschritten entfernt wird, wie Ausgasen bei vergleichsweise grossen Drücken und Überwachen der ausgegasten Menge an chlorierten organischen Verbindungen.

### KURZE BESCHREIBUNG DER ZEICHNUNGEN

Nachfolgend wird die Erfindung anhand eines in Zeichnungen dargestellten Ausführungsbeispiels näher erläutert. Hierbei zeigt:
- Fig.1: ein Blockschaltbild einer Entsorgungsanlage mit einem erfindungsgemässen Autoklaven,
- Fig.2: ein Diagramm, in dem die Verläufe von Druck p und Temperatur T im Inneren des Autoklaven in Abhängigkeit von der Zeit t angegeben sind,
- Fig.3: eine Aufsicht auf einen Schnitt durch eine Ausführungsform des in Fig.1 schematisch dargestellten Autoklaven,
- Fig.4: eine Aufsicht auf einen vergrössert dargestellten Schnitt durch eine Deckeldichtung des Autoklaven gemäss Fig.3, und
- Fig.5: eine Aufsicht auf einen vergrössert dargestellten Schnitt durch ein Wellenlager des Autoklaven gemäss Fig.3.

### WEG ZUR AUSFÜHRUNG DER ERFINDUNG

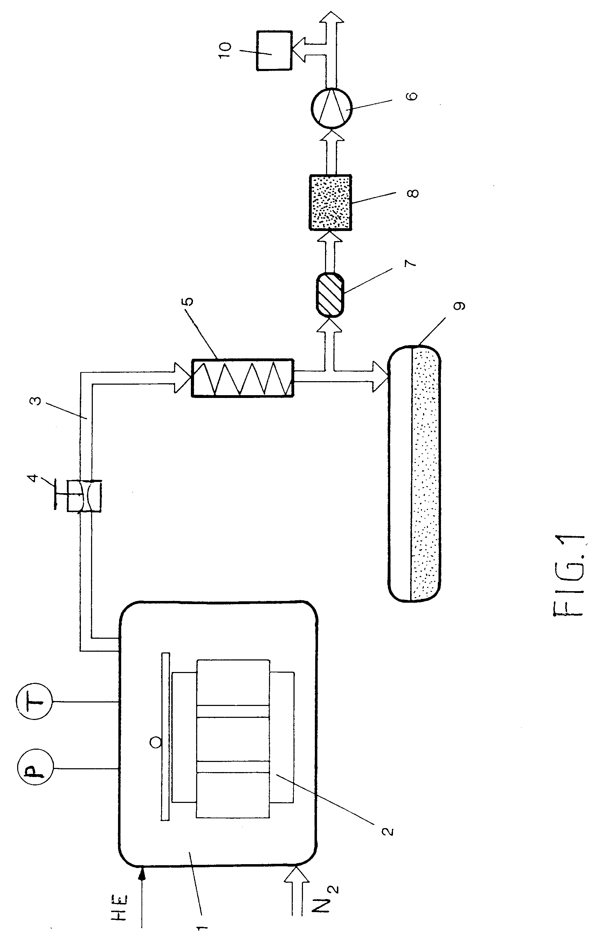

Bei der in Fig.1 dargestellten Entsorgungsanlage bezeichnet 1 einen Heizenergie HE aufnehmenden Autoklaven mit einer Druck-p und einer Temperaturüberwachung T. Im Inneren des Autoklaven befindet sich ein zu entsorgendes Gerät 2, beispielsweise ein zuvor mit einem Isolieröl etwa auf der Basis polychlorierter Biphenyle und/oder Trichlorbenzol gefüllter Transformator, in dem nach Ablassen des Isolieröls in schwer zugänglichen Poren seiner organischen Bestandteile eine Restmenge an Isolieröl verblieben ist. Die Masse des verbleibenden Isolieröls beträgt bei einem 630 kV-Transformator mit ca. 40 kg organischen, etwa Holz, Papier, Baumwolle und/oder Kunststoff umfassenden, Bestandteilen und einer Isolierölfüllung von ca. 400 kg typischerweise ca. 40 kg. Der Autoklav 1 ist über eine beheizte Transferleitung 3 und ein beheizbares Drucksteuerventil 4 mit einem Kühler 5 verbindbar. Eine Vakuumpumpe 6 wirkt über einen flüssige und feste Bestandteile absorbierenden Aerosolabscheider 7 und ein organische Verbindungen zurückhaltendes, vorzugsweise Aktivkohle enthaltendes, Filter 8 auf den mit dem Autoklaven 1 verbindbaren Raum des Kühlers 5. Dieser Raum des Kühlers 5 ist auch mit einem Lagertank 9 verbindbar. Das Bezugszeichen 10 bezieht sich auf eine der Vakuumpumpe 6 nachgeschaltete Analysevorrichtung, welche dem Nachweis der Unbedenklichkeit der von der Vakuumpumpe 6 ins Freie geführten Gasen dient.

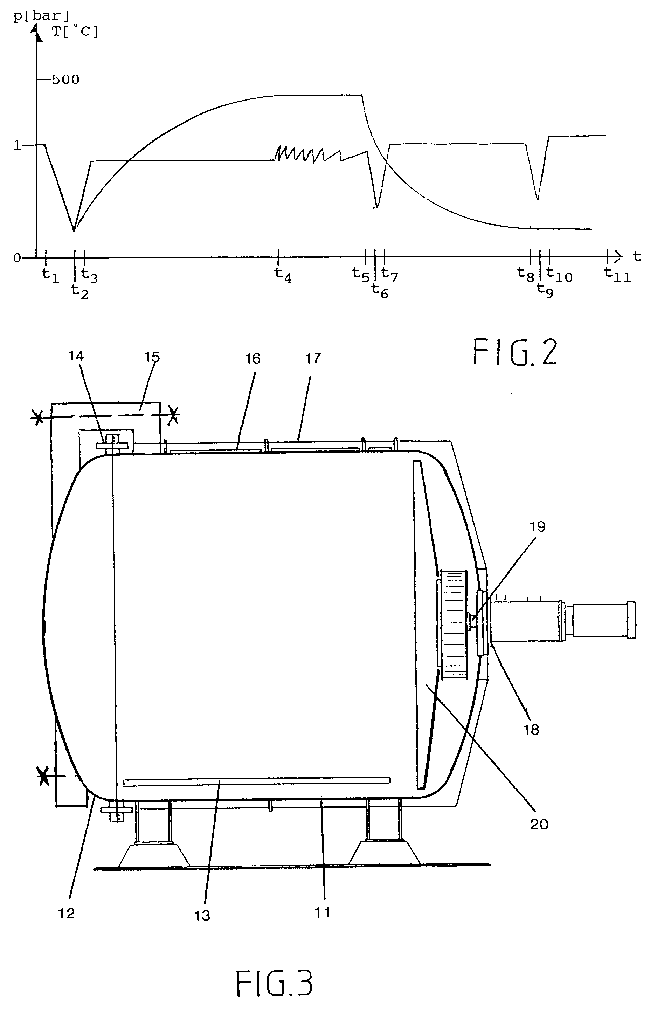

Wie aus dem Diagramm gemäss Fig.2 ersichtlich ist, wird der mit dem Gerät 2 beladene Autoklav 1 ab einem Zeitpunkt t₁ zunächst bei Raumtemperatur auf einen Restdruck von einigen mbar evakuiert. Hierbei werden Sauerstoff und sauerstoffhaltige Verbindungen aus dem Gerät 2 und dem Autoklaven 1 entfernt. Kondensierbare Gasanteile, wie Wasserdampf, werden im Kühler 5 zurückbehalten.

Ab einem Zeitpunkt t₂ wird der Autoklav 1 durch eine auf seiner Aussenseite angebrachte elektrische Widerstandsheizung erhitzt. Zugleich wird ins Innere des Autoklaven 1 Stickstoff eingelassen. Der Stickstoff führt die in der Wand des Autoklaven 1 gespeicherte Wärme ins Autoklaveninnere an das Gerät 2 und beschleunigt so den Aufheizvorgang des Gerätes ganz erheblich. Eine auch für grosse Geräte, wie etwa den vorstehend erwähnten Transformator, ausreichend hohe Aufheizgeschwindigkeit bei gleichzeitig grosser Betriebssicherheit wird erreicht, wenn der Druck des im Autoklaveninneren vorgesehenen Gases grösser 0,5 bar und kleiner 1 bar, vorzugsweise 700 bis 950 mbar, ist.

Der angestrebte Gasdruck wird zum Zeitpunkt t₃ erreicht. Das Drucksteuerventil 4 wird nun so eingestellt, dass bei einer geringen Menge an beständig zugeführtem inertem Trägergas der Unterdruck im Autoklaven konstant bleibt und typischerweise ca. 800 mbar beträgt. Bei diesem Druck ist eine hohe Aufheizrate gewährleistet und ist zugleich sichergestellt, dass keine schädlichen Gase aus dem Autoklaveninneren nach aussen entweichen können. Beim Aufheizen werden die isolierölgetränkten organischen Bestandteile des Gerätes 2 unter teilweiser Zersetzung ausgegast. Das hierbei gebildete, chlorierte und chlorfreie organische Verbindungen, Wasser, Chlorwasserstoff und inertes Trägergas, insbesondere Stickstoff, aufweisende Prozessgas wird über die beheizte Transferleitung 3 und das ebenfalls beheizte Drucksteuerventil 4 in den Kühler 5 geführt. Im Kühler 5 gebildetes flüssiges Kondensat wird in den Lagertank 9 geleitet. Dieses Kondensat kann dann zusammen mit dem zuvor aus dem Gerät 2 abgelassenen Isolieröl in einer Hochtemperatur-Verbrennungsanlage entsorgt werden.

Die nichtkondensierten Teile des Prozessgases, wie unter den gegebenen Bedingungen nichtkondensierbare chlorierte und chlorfreie organische Verbindungen sowie Kohlendioxid und Chlorwasserstoff, werden über den flüssige und feste Bestandteile absorbierenden Aerosolabscheider 7 und das organische Verbindungen zurückhaltende, vorzugsweise Aktivkohle enthaltende, Filter 8 entfernt. Verbrauchte Aktivkohle kann im Autoklaven 1 wieder regeneriert werden. Zum Nachweis der Unbedenklichkeit der ins Freie geführten Teile des Prozessgases wird das verbleibende Prozessgas noch durch die Analysevorrichtung 10 geleitet.

Zum Zeitpunkt t₄ ist das Gerät 2 auf eine Haltetemperatur von typischerweise ca. 450°C aufgeheizt. Der überwiegende Teil der chlorhaltigen Verbindungen ist zu diesem Zeitpunkt bereits aus dem Gerät 2 entfernt. Bei geschlossenem Drucksteuerventil 4 wird nun der durch Ausgasen hervorgerufene Druckanstieg zwischen einem unteren und einem oberen Druckwert im Autoklaveninneren überwacht. Übersteigt bei konstanter Haltetemperatur der aus einer zeitlichen Überwachung des Druckverlaufs ermittelte Druckanstieg und damit die pro Zeiteinheit ausgegaste Menge an chlorierten organischen Verbindungen einen vorgegebenen Grenzwert und wird ein oberer Druckwert von beispielsweise 900 - 950 mbar im Autoklaveninneren überschritten, so wird das Drucksteuerventil 4 kurzzeitig geöffnet und der Druck im Autoklaven 1 wieder auf den beim Aufheizen herrschenden Druck von beispielsweise 800 - 850 mbar (unterer Druckwert) gesenkt. Dieser Vorgang wird solange wiederholt, bis bei der konstanten Haltetemperatur die pro Zeiteinheit ausgegaste Menge an chlorierten organischen Verbindungen unterhalb des vorgegebenen Grenzwertes der pro Zeiteinheit ausgegasten Menge liegt. Dieser Grenzwert ist so bestimmt, dass die im Gerät 2 verbleibende Menge an chlorierten organischen Verbindungen physiologisch unbedenklich ist.

Sobald dieser Grenzwert zum Zeitpunkt t₅ unterschritten ist, wird die Heizung abgeschaltet und wird der Autoklav 1 zugleich evakuiert. Nach dem Evakuieren wird zum Zeitpunkt t₆ Stickstoff eingelassen. Zum Zeitpunkt t₇ hat der Stickstoff einen Druck von nahezu 1 bar erreicht. Bei diesem Druck wird der Autoklav 1 gespült und das Gerät 2 dabei vergleichsweise rasch abgekühlt. Abschliessend wird zum Zeitpunkt t₈ der Autoklav noch einmal evakuiert, anschliessend ab dem Zeitpunkt t₉ solange mit Stickstoff gefüllt bis zum Zeitpunkt t₁₀ praktisch Atmosphärendruck erreicht ist. Nach weiterem Spülen mit Stickstoff kann das gereinigte Gerät 2 schliesslich zum Zeitpunkt t₁₁ dem Autoklaven 1 entnommen werden.

Aus Fig. 3 ist eine bevorzugte Ausführungsform des zur Durchführung des zuvor beschriebenen Verfahrens verwendeten Autoklaven 1 ersichtlich. Dieser Autoklav 1 weist ein beheizbares Gehäuse 11 mit einem Deckel 12 zum druck- und vakuumdichten Verschliessen einer nicht bezeichneten Ladeöffnung auf, durch die das nicht dargestellte Gerät 2 ins Autoklaveninnere gebracht und auf ein Podest 13 geladen werden kann. Das Bezugszeichen 14 bezieht sich auf eine das druck- und vakuumdichte Verschliessen der Ladeöffnung gewährleistende Flanschdichtung. Die hierzu notwendigen Kräfte werden von lediglich schematisch angedeuteten Spannelementen 15 erzeugt. Auf der Aussenfläche des Gehäuses 11 ist eine elektrische Widerstandsheizung 16 angeordnet. Diese Heizung ist von einem hohlen, vorzugsweise mit Stickstoff oder Luft spülbaren Isoliermantel 17 umgeben. Durch das Spülen wird ein rascheres Abkühlen des Autoklaven 1 nach dem Ausgasen und damit ein beschleunigter Durchlauf des zu reinigenden Gerätes 2 durch den Autoklaven 1 erreicht. 18 bezeichnet eine Durchführung für eine Welle 19, welche einen im Innere des Gehäuses 11 vorgesehenen und der Umwälzung des inerten Trägergases dienenden Ventilator 20 antreibt.

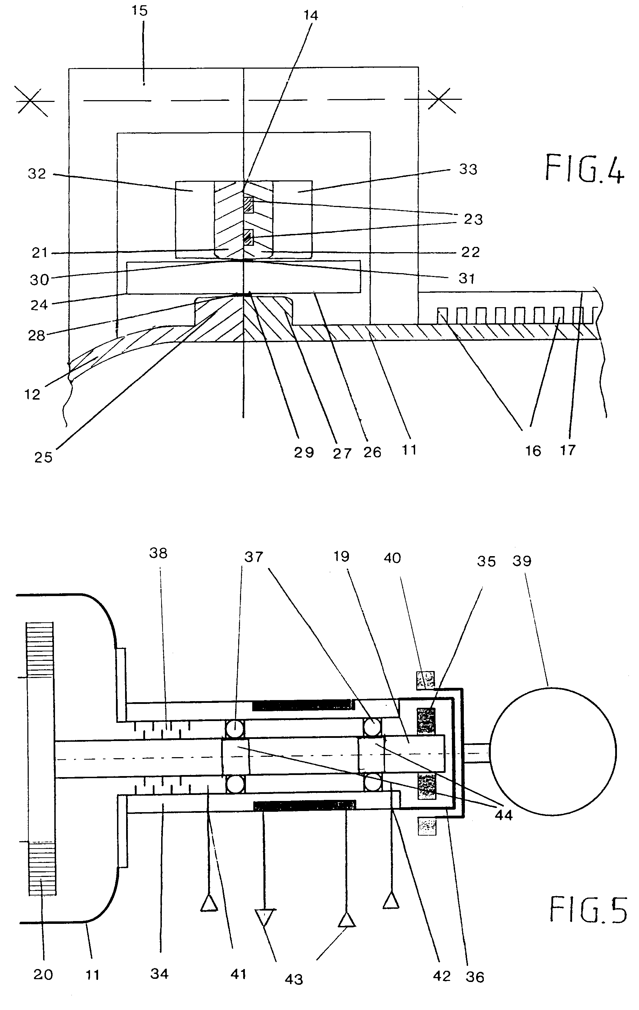

Aus Fig. 4 ist eine bevorzugte Ausführungsform der Flanschdichtung 14 zu entnehmen. Ersichtlich weist diese Flanschdichtung zwei Flansche 21 und 22 auf, zwischen denen zwei Dichtungsringe 23 eingespannt sind. Der Flansch 21 ist über ein wärmedämmendes, druck- und vakuumdichtes Kompensationselement 24 mit einem Flanschansatz 25 des Deckels 12 verbunden. Der Flansch 22 ist über ein wärmedämmendes, druck- und vakuumdichtes Kompensationselement 26 mit einem Flanschansatz 27 des Gehäuses 11 verbunden. Die beiden Kompensationselemente 24 und 26 sind jeweils ringförmig ausgebildet und weisen jeweils U-Profil auf. Sie bestehen aus einem elastisch gut verformbaren und einen hohen Elastizitätsmodul aufweisenden Material, wie vorzugsweise einer zur Herstellung von Federn oder Faltenbalgen verwendeten Legierung. Die freien Enden der dem Autoklaven 1 zugewandten Schenkel der U-Profile sind unter Bildung jeweils einer ringförmigen Naht 28 bzw. 29 druck- und vakuumdicht mit dem äusseren Rand des Flanschansatzes 25 bzw. 27 verschweisst. Die freien Enden der vom Autoklaven 1 abgewandten äusseren Schenkel der U-Profile sind unter Bildung jeweils einer ringförmigen Naht 30 bzw. 31 druck- und vakuumdicht mit dem inneren Rand des Flansches 21 bzw. 22 verschweisst.

Beim Schliessen des Gehäuse 11 wird der Deckel mit einer nicht dargestellten Hubvorrichtung derart an die Ladeöffnung des Gehäuses 11 gebracht, dass einander gegenüberstehende Spannteile der Spannelemente 15 miteinander fluchten. Die Spannteile werden durch Verschraubungen oder durch hydraulische resp. pneumatische Vorrichtungen unter Bildung von Anpresskraft verspannt. Beim Verspannen übernehmen die Flanschansätze 25 den Hauptteil der Spannkraft. Ein wesentlich kleinerer Teil der Spannkraft wird über die federnd ausgebildeten Kompensationselemente 24 und 26 auf die Flansche 21 und 22 übertragen. Diese Kraft ist ausreichend hoch, um die benötigte Druck- und Vakuumfestigkeit der Flanschdichtung 14 zu gewährleisten. Gegebenenfalls können die beiden Flansche 21 und 22 zusätzlich durch Spannschrauben gesichert werden.

Durch diese Massnahmen wird erreicht, dass nur eine sehr geringe Wärmemenge vom Gehäuse 11 des Autoklaven 1 zur Flanschdichtung 14 gelangt. Dies ist zum einen dadurch bedingt, dass durch den zwischen beiden Flanschansätzen vorhandenen, schmalen Ringspalt nur eine sehr kleine Menge an heissem Prozessgas in den von den beiden Kompensationselementen 24 und 26 und den Dichtungsringen begrenzten Raum gelangen kann. Zum anderen ist dies vor allem aber dadurch bedingt, dass die Kompensationselemente 24 und 26 die Flansche 21 und 22 thermisch von den Flanschansätzen 25 und 27 isolieren. Durch Wärmeleitung und Wärmestrahlung gelangt nur noch eine gegenüber angeschweissten Flanschen vergleichsweise geringe Wärmemenge zur Flanschdichtung 14. Die wärmeempfindlichen Dichtungsringe 23 können so auf tiefen Temperaturen gehalten werden.

Falls erwünscht, können die Aussenseiten der Flansche 21 und 22 zusätzlich gekühlt werden. Dies kann mit Vorteil dadurch erreicht werden, dass die Flansche 21 und 22 an Ringkanäle 32 und 33 angrenzen, durch welche ein Kühlmittel, wie etwa Luft geführt wird.

Aus Fig. 5 ist eine bevorzugte Ausführungsform der Durchführung 18 für die Welle 19 zu entnehmen. Ersichtlich weist die Durchführung 18 einen Rohrabschnitt 34 auf, dessen eines Ende an einer Durchführungsöffnung an das Gehäuse 11 angesetzt ist, und dessen ein erstes Teil 35 einer Magnetkupplung aufnehmendes anderes Ende mit einem dünnwandigen, topfförmigen Metallteil 36 druck- und vakuumdicht abgeschlossen ist. Die Welle 19 ist auf einem ausserhalb des Gehäuses 11 angeordneten Lager 37 abgestützt. Zwischen dem Inneren des Gehäuses 11 und dem Lager 37 ist eine Labyrinthdichtung 38 angeordnet. Die Labyrinthdichtung 38 enthält auf der Welle 19 mit axialem Abstand zueinander befestigte Ringe, zwischen denen Ringe angeordnet sind, die auf der Innenfläche des Rohrabschnitts 34 ebenfalls mit axialem Abstand zueinander angebracht sind. Der durch die Ringe gebildete labyrinthartige Weg stellt einen hohen Strömungswiderstand für Gas dar, welches aus dem Inneren des Gehäuses 11 in den das Lager 37 aufnehmenden Raum treten möchte.

Die Labyrinthdichtung 38, das Lager 37 und das aus der Durchführungsöffnung des Gehäuses 11 nach aussen geführte Ende der Welle 11 sind hermetisch gegenüber dem Aussenraum abgedichtet im Rohrabschnitt 34 angeordnet. Ein von einem Antrieb 39 bewegtes zweites Teil 40 der Magnetkupplung, welches bei laufendem Antrieb 39 das erste Teil 35 der Magnetkupplung und damit die Welle 19 antreibt, umgibt das den Rohrabschnitt 34 hermetisch abschliessende Metallteil 36 koaxial mit Abstand. Der Rohrabschnitt 34 weist Eintrittsöffnungen 41, 42 zum Einspeisen zumindest eines Teil des inerten Trägergases auf.

Die Eintrittsöffnung 42 ist zwischen dem Lager 34 und dem antriebsseitigen Ende der Welle 19 angeordnet. Von dieser Eintrittsöffnung aus wird das in den Rohrabschnitt 34 eingespeiste Trägergas über das Lager 37 und die Labyrinthdichtung 38 in den Innenraum des Autoklaven 1 geführt. Durch das eingespeiste inerte Trägergas wird das Lager 37 gekühlt. Zugleich verhindert der durch die Labyrinthdichtung 38 strömende Trägergasstrom das Eintreten von heissem Prozessgas aus dem Autoklaven 1 in den das Lager 37 aufnehmenden Raum. Hierdurch wird die Wirkung der Labyrinthdichtung 38 noch zusätzlich verbessert. Der das Lager 37 umschliessende Rohrabschnitt 34 kann gegebenenfalls durch von aussen zugeführtes Kühlmittel 43 im Bereich des Lagers 37 zusätzlich gekühlt werden.

Eine weitere Kühlung des Lagers 37 wird durch Ringe 44 aus wärmeisolierendem Material, wie etwa Polytetrafluoräthylen, erreicht, welche von der Welle 19 getragen werden, und auf welchen das Lager 37 aufliegt. Diese Ringe 44 reduzieren die aus dem Autoklaveninneren über die Welle 19 ans Lager 37 geführte Wärmemenge erheblich.

### BEZEICHNUNGSLISTEe

- 1: Autoklav
- 2: Gerät
- 3: Transferleitung
- 4: Drucksteuerventil
- 5: Kühler
- 6: Vakuumpumpe
- 7: Aerosolabscheider
- 8: Filter
- 9: Lagertank
- 10: Analysevorrichtung
- 11: Gehäuse
- 12: Deckel
- 13: Podest
- 14: Flanschdichtung
- 15: Spannelemente
- 16: Widerstandsheizung
- 17: Isoliermantel
- 18: Durchführung
- 19: Welle
- 20: Ventilator
- 21, 22: Flansche
- 23: Dichtungsringe
- 24, 26: Kompensationselemente
- 25, 27: Flanschansätze
- 28, 29,: Nähte
- 30, 31 32, 33: Ringkanäle
- 34: Rohrabschnitt
- 35, 40: Teile einer Magnetkupplung
- 36: Metallteil
- 37: Lager
- 38: Labyrinthdichtung
- 39: Antrieb
- 41, 42: Eintrittsöffnungen
- 43: Kühlmittel
- 44: Ringe

## Patentansprüche

1. Autoklav mit einem beheizbaren Gehäuse (11) und einem Deckel (12) zum druck- und vakuumdichten Verschliessen einer Ladeöffnung, gekennzeichnet durch zwei Flansche (21, 22), von denen ein erster (21) über ein erstes wärmedämmendes Kompensationselement (24) druck- und vakuumdicht mit dem Deckel (12) und ein zweiter (22) über ein zweites wärmedämmendes Kompensationselement (26) druck- und vakuumdicht mit dem Gehäuse (11) verbunden ist.

2. Autoklav nach Anspruch 1, dadurch gekennzeichnet, dass bei verschlossenem Autoklaven (1) Deckel (12) und Gehäuse (11) mit Flanschansätzen (25, 27) aufeinanderliegen, und dass das erste Kompensationselement (24) mit dem Flanschansatz (25) des Deckels (12) und das zweite Kompensationselement (26) mit den Flanschansatz (27) des Gehäuses (11) druck- und vakuumdicht verbunden ist.

3. Autoklav nach einem der Ansprüche 1 oder 2, dadurch gekennzeichnet, dass erstes und/oder zweites Kompensationselement (24, 26) ringförmig ausgebildet sind und U-Profil aufweisen.

4. Autoklav nach Anspruch 3, dadurch gekennzeichnet, dass ein erster Schenkel des U-Profils zumindest an seinem freien Ende mit dem am Gehäuse (11) oder am Deckel (12) vorgesehenen Flanschansatz (25, 27) und der zweite Schenkel des U-Profils mit einem beider Flansche (21, 22) druck- und vakuumdicht verbunden ist.

5. Autoklav nach einem der Ansprüche 1 bis 4, dadurch gekennzeichnet, dass die Flansche (21, 22) an kühlmittelführende Ringkanäle (32, 33) angrenzen.

6. Autoklav nach einem der Ansprüche 1 bis 5 mit einer ins Innere des Gehäuses (11) des Autoklaven (1) geführten Welle (19) für einen Ventilator (20), dadurch gekennzeichnet, dass die Welle (19) auf einem ausserhalb des Gehäuses (11) angeordneten Lager (37) abgestützt ist, und dass zwischen dem Inneren des Gehäuses (11) und dem Lager (37) eine Labyrinthdichtung (38) angeordnet ist.

7. Autoklav nach Anspruch 6, dadurch gekennzeichnet, dass die Labyrinthdichtung (38), das Lager (37) und ein aus einer Durchführungsöffnung des Gehäuses (11) nach aussen geführtes Ende der Welle (19) in einem Rohrabschnitt (34) angeordnet sind, dessen die Labyrinthdichtung (38) aufnehmendes eines Ende an der Durchführungsöffnung an das Gehäuse (11) angesetzt ist, und dessen ein erstes Teil (35) einer Magnetkupplung umschliessendes anderes Ende druck- und vakuumdicht abgeschlossen ist.

8. Autoklav nach Anspruch 7, dadurch gekennzeichnet, dass ein über ein Magnetfeld mit dem ersten Teil (35) zusammenwirkendes und von einem Antrieb (39) bewegtes zweites Teil (40) der Magnetkupplumg das vom Autoklavengehäuse (11) abgewandte Ende des Rohrabschnittes (34) koaxial mit Abstand umgibt.

9. Autoklav nach einem der Ansprüche 7 oder 8, dadurch gekennzeichnet, dass der Rohrabschnitt (34) mindestens eine Eintrittsöffnung (41) zum Einspeisen zumindest eines Teil des inerten Trägergases aufweist, welche zwischen dem Lager (37) und dem nach aussen geführten Ende der Welle (19) angeordnet ist, und von der aus das in den Rohrabschnitt (34) eingespeiste Trägergas über das Lager (37) und die Labyrinthdichtung (38) in den Innenraum des Autoklaven (1) geführt wird.

10. Autoklav nach Anspruch 9, dadurch gekennzeichnet, dass der Rohrabschnitt (34) im Bereich des Lagers (37) zusätzlich gekühlt ist.

11. Autoklav nach Anspruch 10, dadurch gekennzeichnet, dass die Welle (19) im Bereich des Lagers (37) Ringe (44) aus wärmeisolierendem Material trägt, auf denen das Lager (37) aufliegt.

12. Verwendung des Autoklaven gemäß eines der Ansprüche 1 bis 11 in einem Verfahren zum Entfernen von chlorierte organische Verbindungen enthaltender Flüssigkeit aus einem in den Autoklaven (1) eingeschlossenen Gerät (2), bei dem durch Evakuieren zunächst Sauerstoff und sauerstoffhaltige Verbindungen aus dem Gerät (2) entfernt werden, das Gerät (2) sodann mit inertem Trägergas auf eine Haltetemperatur aufgeheizt wird, bei der die chlorierten organischen Verbindungen aus dem Gerät (2) ausgegast und als Bestandteile eines Prozessgases bei Unterdruck solange aus dem Autoklaven (1) herausgeführt werden, bis das Gerät (2) frei von den chlorierten organischen Verbindungen ist, dadurch gekennzeichnet, dass beim Ausgasen der chlorierten organischen Verbindungen ein Druck von mehr als 0,5 bar absolut, jedoch geringer als Atmosphärendruck, im Autoklaven (1) herrscht, und dass bei konstanter Haltetemperatur bei verschlossenem Autoklaven (1) die pro Zeiteinheit ausgegaste Menge an chlorierten organischen Verbindungen ermittelt und unterhalb eines vorgegebenen Grenzwertes der pro Zeiteinheit ausgegasten Menge die Temperatur abgesenkt wird.

13. Verwendung nach Anspruch 12, dadurch gekennzeichnet, dass die pro Zeiteinheit ausgegaste Menge an chlorierten organischen Verbindungen durch zeitliches Erfassen des im Autoklaven (1) herrschenden Drucks ermittelt wird.

14. Verwendung nach einem der Ansprüche 12 oder 13, dadurch gekennzeichnet, dass der Autoklav (1) beim Absenken der Temperatur evakuiert und anschliessend mit Inertgas gespült wird, welches einen Druck aufweist, welcher höher als der Druck des Prozessgases beim Ausgasen, aber geringer als Atmosphärendruck ist.

## Claims

1. Autoclave having a heatable shell (11) and a cover (12) for the pressure- and vacuum-tight sealing of a loading port, characterized by two flanges (21, 22), of which a first (21) is connected pressure- and vacuum-tightly via a first heat-insulating compensation element (24) to the cover (12) and a second (22) is connected pressure- and vacuum-tightly via a second heat-insulating compensation element (26) to the shell (11).

2. Autoclave according to Claim 1, characterized in that when the autoclave (1) is closed, cover (12) and shell (11) having flange attachments (25, 27) lie against each other, and in that the first compensation element (24) is connected pressure- and vacuum-tightly to the flange attachment (25) of the cover (12) and the second compensation element (26) is connected pressure-and vacuum-tightly to the flange attachment (27) of the shell (11).

3. Autoclave according to one of Claims 1 or 2, characterized in that first and/or second compensation element (24, 26) are annular and have a U-profile.

4. Autoclave according to Claim 3, characterized in that a first limb of the U profile is connected pressure- and vacuum-tightly at least at its free end to the flange attachment (25, 27) provided on the housing (11) or the cover (12) and the second limb of the U profile is connected pressure- and vacuum-tightly to one of two flanges (21, 22).

5. Autoclave according to one of Claims 1 to 4, characterized in that the flanges (21, 22) border coolant-bearing annular channels (32, 33).

6. Autoclave according to one of Claims 1 to 5 having a fan (20) shaft (19) conducted into the interior of the shell (11) of the autoclave (1), characterized in that the shaft (19) is supported on a bearing (37) disposed outside the shell (11), and in that a labyrinth seal (38) is disposed between the interior of the shell (11) and the bearing (37).

7. Autoclave according to Claim 6, characterized in that the labyrinth seal (38), the bearing (37) and an end of the shaft (19) which is conducted through a lead through orifice of the shell (11) to the exterior are disposed in a tube section (34), the one end of which receiving the labyrinth seal (38) is fitted to the lead through orifice on the shell (11), and the other end of which surrounding a first part (35) of a magnetic coupling is sealed pressure- and vacuum-tightly.

8. Autoclave according to Claim 7, characterized in that a second part (40) of the magnetic coupling, which second part is moved by a magnetic field interacting with the first part (35) and by a drive (39), coaxially surrounds at a distance the end of the tube section (34) facing away from the autoclave shell (11).

9. Autoclave according to one of Claims 7 or 8, characterized in that the tube section (34) possesses at least one inlet orifice (41) for feeding in at least some of the inert carrier gas, which inlet orifice is disposed between the bearing (37) and the end of the shaft (19) which is conducted to the exterior, and from which the carrier gas fed into the tube section (34) is conducted via the bearing (37) and the labyrinth seal (38) into the interior of the autoclave (1).

10. Autoclave according to Claim 9, characterized in that the tube section (34) is additionally cooled in the area of the bearing (37).

11. Autoclave according to Claim 10, characterized in that the shaft (19), in the area of the bearing (37), carries rings (44) of heat-insulating material, on which the bearing (37) lies.

12. Use of the autoclave according to one of Claims 1 to 11 in a process for removing liquid containing chlorinated organic compounds from an apparatus (2) enclosed in the autoclave (1), in which, by evacuation, oxygen and oxygen-containing compounds are firstly removed from the apparatus (2), the apparatus (2) is then heated by inert carrier gas to a holding temperature at which the chlorinated organic compounds are outgassed from the apparatus (2) and are conducted out of the autoclave (1) as components of a process gas at reduced pressure until the apparatus (2) is free from the chlorinated organic compounds, characterized in that, during the outgassing of the chlorinated organic compounds, a pressure of greater than 0.5 bar absolute, but less than atmospheric pressure, prevails in the autoclave (1), and in that, at a constant holding temperature with the autoclave (1) sealed, the amount of chlorinated organic compounds outgassed per unit time is determined and, below a preset limit value of the amount outgassed per unit time, the temperature is lowered.

13. Use according to Claim 12, characterized in that the amount of chlorinated organic compounds outgassed per unit time is determined by recording over time the pressure prevailing in the autoclave (1).

14. Use according to one of Claims 12 or 13, characterized in that the autoclave (1) is evacuated during lowering of the temperature and is then flushed with inert gas, which has a pressure which is higher than the pressure of the process gas during outgassing, but is less than atmospheric pressure.

## Revendications

1. Autoclave avec une enceinte chauffante (11) et un couvercle (12) pour l'obturation étanche à la pression et au vide d'une ouverture de chargement, caractérisé par deux brides (21, 22), dont une première (21) est assemblée au couvercle (12) de façon étanche à la pression et au vide par un premier élément de compensation thermo-isolant (24) et une seconde (22) est assemblée à l'enceinte (11) de façon étanche à la pression et au vide par un second élément de compensation thermo-isolant (26).

2. Autoclave suivant la revendication 1, caractérisé en ce que, l'autoclave (1) étant fermé, le couvercle (12) et l'enceinte (11) avec des sièges de bride (25, 27) sont superposés, et en ce que le premier élément de compensation (24) est assemblé avec le siège de bride (25) du couvercle (12) et le second élément de compensation (26) est assemblé avec le siège de bride (27) de l'enceinte (11), de façon étanche à la pression et au vide.

3. Autoclave suivant l'une quelconque des revendications 1 ou 2, caractérisé en ce qu'un premier et/ou un second élément de compensation (24, 26) sont de forme annulaire et présentent un profil en U.

4. Autoclave suivant la revendication 3, caractérisé en ce qu'une première branche du profil en U est assemblée au moins par son extrémité libre au siège de bride (25, 27) prévu sur l'enceinte (11) ou sur le couvercle (12) et la seconde branche du profil en U est assemblée de façon étanche à la pression et au vide à l'une des deux brides (21, 22).

5. Autoclave suivant l'une quelconque des revendications 1 à 4, caractérisé en ce que les brides (21, 22) sont jointives à des canaux annulaires (32, 33) contenant un agent de refroidissement.

6. Autoclave suivant l'une quelconque des revendications 1 à 5 avec un arbre (19) pour un ventilateur (20), mené à l'intérieur de l'enceinte (11) de l'autoclave (1), caractérisé en ce que l'arbre (19) est supporté sur un palier (37) disposé à l'extérieur de l'enceinte (11), et en ce qu'un joint à labyrinthe (38) est disposé entre l'intérieur de l'enceinte (11) et le palier (37).

7. Autoclave suivant la revendication 6, caractérisé en ce que le joint à labyrinthe (38), le palier (37) et une extremité de l'arbre (19) menée vers l'extérieur par une ouverture de passage de l'enceinte (11) sont disposés dans une portion tubulaire (34), dont une première extrémité comportant le joint à labyrinthe (38) est appliquée à l'ouverture de passage de l'enceinte (11), et dont l'autre extrémité entourant une première partie (35) d'un accouplement magnétique est obturée de façon étanche à la pression et au vide.

8. Autoclave suivant la revendication 7, caractérisé en ce qu'une seconde partie (40) de l'accouplement magnétique coopérant par un champ magnétique avec la première partie (35) et mise en mouvement par un mécanisme d'entraînement (39) entoure coaxialement, a une certaine distance, l'extrémité de la portion tubulaire (34) située à l'opposé de l'enceinte (11) de l'autoclave.

9. Autoclave suivant l'une quelconque des revendications 7 ou 8, caractérisé en ce que la portion tubulaire (34) présente au moins une ouverture d'entrée (41) pour l'introduction d'au moins une partie du gaz porteur inerte, qui est disposée entre le palier (37) et l'extrémité de l'arbre (19) menée vers l'extérieur, et à partir de laquelle le gaz porteur introduit dans la portion tubulaire (34) est conduit dans l'espace intérieur de l'autoclave (1), via le palier (37) et le joint à labyrinthe (38).

10. Autoclave suivant la revendication 9, caractérisé en ce que la portion tubulaire (34) est refroidie en plus dans la région du palier (37).

11. Autoclave suivant la revendication 10, caractérisé en ce que l'arbre (19) porte, dans la région du palier (37), des anneaux (44) en matière thermo-isolante, sur lesquels repose le palier (37).

12. Utilisation de l'autoclave suivant l'une quelconque des revendications 1 à 11, dans un procédé pour éliminer un liquide contenant des composés organiques chlorés hors d'un appareil (2) enfermé dans l'autoclave (1), dans lequel on élimine d'abord l'oxygène et les composés oxygénés hors de l'appareil (2) par mise sous vide, on chauffe alors l'appareil (2) avec un gaz porteur inerte jusqu'à une température de maintien, à laquelle les composés organiques chlorés gazéifiés sont rejetés hors de l'appareil (2) et sont ensuite expulsés hors de l'autoclave (1) sous dépression en faisant partie d'un gaz de traitement, jusqu'à ce que l'appareil (2) soit débarrassé des composés organiques chlorés, caractérisée en ce que, lors du rejet des composés organiques chlorés gazéifiés, il règne dans l'autoclave (1) une pression de plus de 0,5 bar absolus mais inférieure à la pression atmosphérique, et en ce que, pour une température de maintien constante et avec l'autoclave (1) fermé, on détermine la quantité de composés organiques chlorés gazéifiés rejetée par unité de temps et on abaisse la température en dessous d'une valeur limite prédéterminée de la quantité de gaz rejetée par unité de temps.

13. Utilisation suivant la revendication 12, caractérisée en ce que la quantité de composés organiques chlorés gazéifiés rejetée par unité de temps est déterminée par une mesure dans le temps de la pression régnant dans l'autoclave (1).

14. Utilisation suivant l'une quelconque des revendications 12 ou 13, caractérisée en ce que l'autoclave (1) est mis sous vide lors de l'abaissement de la température et est ensuite balayé avec un gaz inerte, qui présente une pression, qui est supérieure à la pression du gaz de traitement lors du rejet des gaz, mais qui est inférieure à la pression atmosphérique.
